# EUROPEAN PATENT APPLICATION

(11) **EP 4 768 232 A1**
(43) Date of publication of application: **01.07.2026**
(21) Application number: 25226952.7
(22) Date of filing: 23.12.2025
(51) Int. Cl.: B29C 70/30, B29C 70/38, B29C 70/54

(54) **LOCATING A COMPOSITE PLY ON A LAYUP TOOL**

(30) Priority: 30.12.2024 US 202419005039
(71) Applicant: The Boeing Company, Arlington, VA 22202 (US)
(72) Inventor: Wienhold, Erik Nicholas, Arlington, 22202 (US); Smith, Brian James, Arlington, 22202 (US); Zmeu, Sandra Louise, Arlington, 22202 (US); Brown, Christopher Robert, Arlington, 22202 (US); Fritzke, Ricardo Andreas, Arlington, 22202 (US); Heng, Sangvavann, Arlington, 22202 (US); Trowbridge, Michael J., Arlington, 22202 (US)
(74) Representative: Arnold & Siedsma

(57) **Abstract**

A ceramic matrix composite part and methods of locating a composite ply on a layup tool are presented. A composite ply comprising a fiducial is placed onto the layup tool. A position of the fiducial of the composite ply is determined relative to the layup tool. An actual position of the composite ply on the layup tool is determined. A difference between the actual position of the composite ply and a designed position for the composite ply is determined.

## Description

This invention was made with Government support under contract number AFRL ManTech FA2394-23-C-B006 awarded by Department of Defense. The government has certain rights in this invention.

### BACKGROUND INFORMATION

### 1. Field:

The present disclosure relates generally to composite manufacturing and more specifically to locating composite plies during composite manufacturing.

### 2. Background:

Parts made of a fabric-based ceramic matrix composite (CMC) material are formed by building up multiple layers of CMC material on top of a layup mandrel or tool mold. In cases where the part edges are not trimmed, precision of edge placement directly affects quality of a finished part. Butt splices have overlap and gap tolerances, while overlapped plies have different tolerances, often within 0.050" of nominal.

It is currently undesirably difficult to verify ply and boundary locations when the backing material is removed from the composite plies. Additionally, conventional methods utilize non-automated processes to locate edges and determine thicknesses, such as overhead laser tracers, depth cameras, and visible confirmation.

Therefore, it would be desirable to have a method and apparatus that takes into account at least some of the issues discussed above, as well as other possible issues. It would be desirable to provide a method of verifying ply locations during manufacturing.

### SUMMARY

An example of the present disclosure provides a method of locating a composite ply on a layup tool. A composite ply comprising a fiducial is placed onto the layup tool. A position of the fiducial of the composite ply is determined relative to the layup tool. An actual position of the composite ply on the layup tool is determined. A difference between the actual position of the composite ply and a designed position for the composite ply is determined.

The method may further comprise cutting a ply shape into a sheet of ceramic matrix composite material having a protective film and placing the fiducial onto the protective film in the ply shape. Placing the fiducial onto the protective film may comprise printing the fiducial onto the protective film and/or adhering the fiducial onto the protective film. The protective film with the fiducial may be removed after determining the position of the composite ply on the layup tool. Placing the composite ply onto the layup tool may comprise placing the composite ply onto a substantially planar tool surface. The method may further comprise cutting a ply shape into a sheet of ceramic matrix composite material having a plurality of fiducials printed on a surface of the sheet of ceramic matrix composite material to form the composite ply and removing the composite ply from the sheet of ceramic matrix composite material. Placing the composite ply onto the layup tool may comprise placing the composite ply onto a curved tool surface. The method may further comprise curing the composite ply and evacuating volatiles of the fiducial during curing of the composite ply. The method may further comprise determining whether the difference is within tolerance and generating an alert when the difference is not within tolerance. The method may further comprise capturing an image of the fiducial on the layup tool, wherein determining the position of the fiducial of the composite ply relative to the layup tool comprises determining a location of the fiducial in the image.

Another example of the present disclosure provides a method of locating a composite ply on a layup tool comprising: (a) cutting a ply shape into a sheet of ceramic matrix composite material having a plurality of fiducials printed on a surface of the ceramic matrix composite material to form a composite ply comprising a fiducial of the plurality of fiducials, and/or (b) cutting a ply shape into a sheet of ceramic matrix composite material having a protective film, and placing a fiducial onto the protective film within the ply shape to form a composite ply comprising the fiducial; placing the composite ply comprising the fiducial onto the layup tool; and determining a position of the composite ply on the layup tool based on a position of the fiducial relative to the layup tool.

The method may further comprise determining if a tool surface of the layup tool is curved, wherein cutting the ply shape into the sheet of ceramic matrix composite material comprises cutting based on a determination that the tool surface is curved. The method may further comprise determining a difference between the actual position of the composite ply and a designed position for the composite ply. The method may further comprise determining whether the difference is within tolerance; and generating an alert when the difference is not within tolerance. The method may further comprise capturing an image of the fiducial on the layup tool; and determining the position of the fiducial of the composite ply relative to the layup tool using the image. The method may further comprise curing the composite ply; and evacuating volatiles of the fiducial during curing of the composite ply.

Another example of the present disclosure provides a method of locating a composite ply on a layup tool comprising: (a) cutting a ply shape into a sheet of ceramic matrix composite material having a protective film, and placing a fiducial onto the protective film within the ply shape to form a composite ply comprising the fiducial, and/or (b) cutting a ply shape into a sheet of ceramic matrix composite material having a plurality of fiducials printed on a surface of the ceramic matrix composite material to form a composite ply comprising a fiducial of the plurality of fiducials; placing the composite ply comprising the fiducial onto the layup tool; and determining a position of the composite ply on the layup tool based on a position of the fiducial relative to the layup tool.

The method may further comprise determining if a tool surface of the layup tool is curved, wherein cutting a ply shape into a sheet of ceramic matrix composite material comprises cutting based on a determination that the tool surface is not curved. The method may further comprise determining a difference between the actual position of the composite ply and a designed position for the composite ply. The method may further comprise determining whether the difference is within tolerance; and generating an alert when the difference is not within tolerance. The method may further comprise capturing an image of the fiducial on the layup tool; and determining the position of the fiducial of the composite ply relative to the layup tool using the image. The method may further comprise removing the protective film with the fiducial after determining the position of the composite ply on the layup tool.

Another example of the present disclosure provides a method of locating a composite ply on a layup tool. The method determines if a tool surface of the layup tool is curved. Based on a determination that the tool surface is curved, a ply shape is cut into a sheet of ceramic matrix composite material having a plurality of fiducials printed on a surface of the ceramic matrix composite material to form a composite ply comprising a fiducial of the plurality of fiducials. The composite ply comprising the fiducial is placed onto the layup tool. A position of the composite ply on the layup tool is determined based on a position of the fiducial relative to the layup tool.

Yet another example of the present disclosure provides a method of locating a composite ply on a layup tool. The method determines if a tool surface of the layup tool is curved. Based on a determination that the tool surface is not curved, a ply shape is cut into a sheet of ceramic matrix composite material having a protective film. A fiducial is placed onto the protective film within the ply shape to form a composite ply comprising the fiducial. The composite ply comprising the fiducial is placed onto the layup tool. A position of the composite ply on the layup tool is determined based on a position of the fiducial relative to the layup tool.

A further example of the present disclosure provides a ceramic matrix composite part. The ceramic matrix composite part comprises a plurality of ceramic matrix composite plies, and ink between two plies of the plurality of ceramic matrix composite plies.

The ink may be arranged in a fiducial with six degrees of freedom. One of the two plies may be a partial ply.

The features and functions can be achieved independently in various examples of the present disclosure or may be combined in yet other examples in which further details can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and features thereof, will best be understood by reference to the following detailed description of an illustrative example of the present disclosure when read in conjunction with the accompanying drawings, wherein:
**Figure 1** is an illustration of an aircraft in accordance with an illustrative example;
**Figure 2** is an illustration of a block diagram of a manufacturing environment in accordance with an illustrative example;
**Figure 3** is an illustration of a top view of fiducials printed on a sheet of ceramic matrix composite material in accordance with an illustrative example;
**Figure 4** is an illustration of a top view of ply cut program in accordance with an illustrative example;
**Figure 5** is an illustration of a top view of a cut sheet of ceramic matrix composite material with fiducials in accordance with an illustrative example;
**Figure 6** is an illustration of a top view of a ply on a layup tool in accordance with an illustrative example;
**Figure 7** is an illustration of a top view of a ply on a layup tool in accordance with an illustrative example;
**Figure 8** is an illustration of an isometric view of a robotic end effector and a ply placed on a layup tool in accordance with an illustrative example;
**Figures 9A** and **9B** are a flowchart of a method of locating a composite ply on a layup tool in accordance with an illustrative example;
**Figure 10** is a flowchart of a method of locating a composite ply on a layup tool in accordance with an illustrative example;
**Figure 11** is a flowchart of a method of locating a composite ply on a layup tool in accordance with an illustrative example;
**Figure 12** is an illustration of an aircraft manufacturing and service method in a form of a block diagram in accordance with an illustrative example; and
**Figure 13** is an illustration of an aircraft in a form of a block diagram in which an illustrative example may be implemented.

### DETAILED DESCRIPTION

The illustrative examples recognize and take into account several considerations. The illustrative examples recognize and take into account that currently overhead laser tracers are utilized to indicate where ply edges should be, and an operator visually confirms a location of the composite ply. The illustrative examples recognize and take into account that this process is a non-automated process. The illustrative examples recognize and take into account that the three-dimensional depth camera is used to confirm ply thickness. Automated accurate placement of CMC material during ply placement assembly.

The illustrative examples present a method of locating a composite ply on a layup tool. The illustrative examples place six degree of freedom (6DOF) or three degree of freedom (3DOF) fiducial markings on the protective film (that will be removed and disposed) or the composite material itself. The illustrative examples utilize a vision system to capture an image of the ply after placement and determine how far (translation and rotation) the fiducials are from nominal.

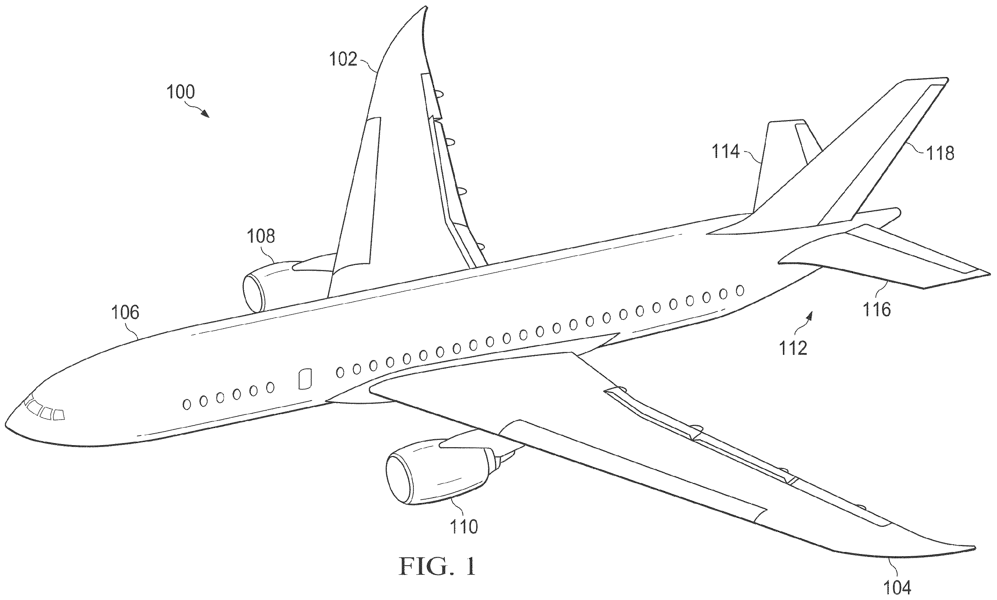

Turning now to **Figure 1****,** an illustration of an aircraft is depicted in accordance with an illustrative example. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft that can have composite parts formed using the illustrative examples. In some illustrative examples, a portion of at least one of wing **102,** wing **104,** or body **106** can be manufactured using the illustrative examples.

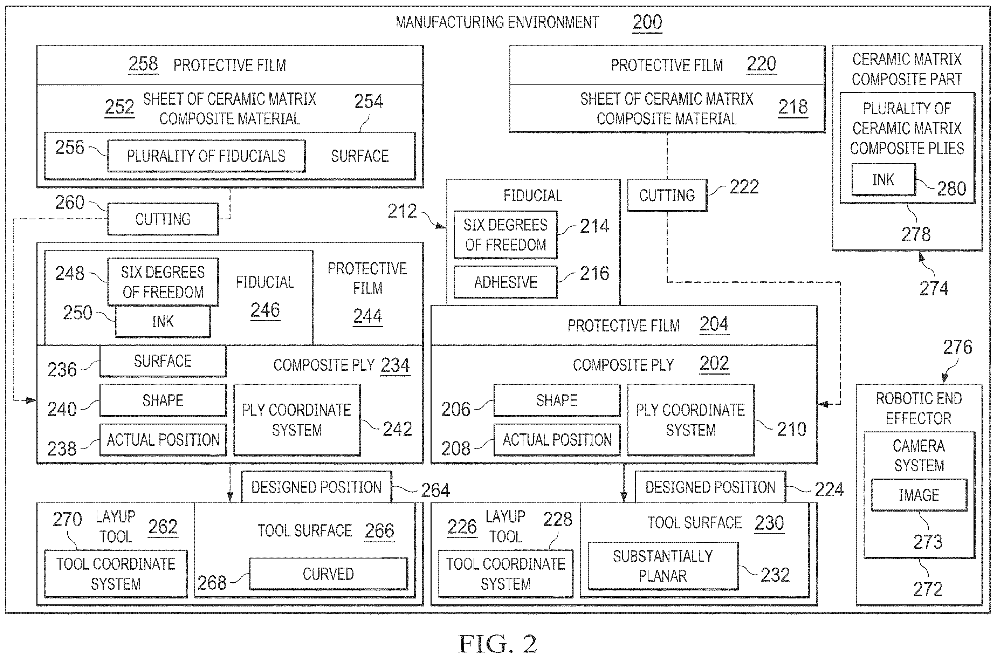

Turning now to **Figure 2****,** an illustration of a block diagram of a manufacturing environment is depicted in accordance with an illustrative example. Composite parts of aircraft **100** can be formed in manufacturing environment **200.** More specifically, composite plies are placed on layup tools, and actual locations of the composite plies are determined in manufacturing environment **200.**

A composite part, such as ceramic matrix composite part **274,** is built up of unique composite plies placed next to, and on top of other composite plies. There are tolerances associated with position of composite plies: overlaps and gaps between ply boundaries.

Each ply has a known coordinate system. In this illustrative example, composite ply **234** has ply coordinate system **242** and composite ply **202** has ply coordinate system **210.**

Each layup tool has a known coordinate system. In this illustrative example, layup tool **262** has tool coordinate system **270** and layup tool **226** has tool coordinate system **228.**

Based on a build plan, each ply is placed on a known position on the respective layup mold. A part build plan defines part geometry and the plies that make up the part. The part build plan also defines geometry of the plies, positions of the plies on the part, and the sequence of placement, etc. Based on a build plan, a ply is picked, placed, and compacted on a layup mold.

Composite ply **234** is placed on tool surface **266.** The build plan has designed position **264** for composite ply **234** on layup tool **262.** The build plan has designed position **224** for composite ply **202** on layup tool **226.**

Comparing the nominal position of where the ply is to be placed in the build plan to the as built position can tell you if the ply border is in the correct place. The illustrative examples compare an actual position determined using a fiducial to the designed position. The illustrative examples compare actual position **238** of composite ply **234** to designed position **264.** The illustrative examples compare actual position **208** of composite ply **202** to designed position **224.** The illustrative examples also determine if gaps and overlaps meet tolerances. In some illustrative examples, boundary tolerance is +/ 0.05".

In some illustrative examples, the fiducials can take the form of barcode grid patterns of a known size. As long as the fiducials are visible, the fiducials can be printed or adhered to a respective composite ply in any desirable fashion.

Camera system **272** can be used to take a picture of a respective fiducial. Camera system **272** can take the form of any desirable type of camera. In some illustrative examples, camera system **272** is a two dimensional camera.

Images taken using camera system **272** can present a position of a respective fiducial. Each fiducial has a six degree of freedom position. Each fiducial has X, Y, and Z translation as well as rotations around X, Y, and Z.

Unique identifiers are associated with each grid pattern in a respective fiducial. In general, the larger the fiducial is within the field of view of camera system **272,** the better accuracy of the six degrees of freedom position.

To form a composite part, composite ply **234** is placed onto layup tool **262.** Composite ply **234** comprises fiducial **246.** In this illustrative example, fiducial **246** is visible on surface **236** of composite ply **234.** In some illustrative examples, fiducial **246** is printed onto surface **236.** In some illustrative examples, fiducial **246** is formed of ink **250.** Ink **250** is compatible with the composite material of composite ply **234.** In some illustrative examples, composite ply **234** is formed of a ceramic matrix composite material. Fiducial **246** has six degrees of freedom **248.** In some illustrative examples, fiducial **246** is formed of material of composite ply **234.**

A position of fiducial **246** of composite ply **234** is determined relative to layup tool **262.**

Actual position **238** of composite ply **234** on layup tool **262** is determined. A difference between actual position **238** of composite ply and a designed position for the composite ply is determined.

In some illustrative examples, composite ply **234** is created by cutting **260** ply shape **240** into sheet of ceramic matrix composite material **252** having protective film **258.** Cutting **260** ply shape **240** into sheet of ceramic matrix composite material **252** having plurality of fiducials **256** printed on surface **254** of ceramic matrix composite material forms composite ply **234.**

In some illustrative examples, the manufacturer of sheet of ceramic matrix composite material **252** prints a random assortment of uniquely identifiable fiducials on a roll or sheet of CMC material. One example of a sheet of CMC material is sheet of ceramic matrix composite material **252.** In some illustrative examples, rolls of CMC material are 3' by 50'. Each respective fiducial on a sheet or roll is uniquely identifiable and has an associated coordinate system.

Composite ply **234** is removed from sheet of ceramic matrix composite material **252** after cutting **260.** In some illustrative examples, additional composite plies with a same layup as composite ply **234** can be cut from sheet of ceramic matrix composite material **252** later.

In some illustrative examples, placing composite ply **234** onto layup tool **262** comprises placing composite ply **234** onto curved **268** tool surface **266.** In some illustrative examples, composite ply **234** with fiducial **246** on composite ply **234** is desirable on curved tool surfaces. Fiducial **246** is not displaced by placement on a curved surface. Fiducial **246** is still identifiable on a curved surface. In some illustrative examples, a position of protective film **244** changes on composite ply **234** as composite ply **234** is placed on curved **268** tool surface **266.**

To form a composite part, composite ply **234** and any other composite plies on layup tool **262** are cured to form the composite part. During curing of composite ply **234,** ink **250** of fiducial **246** is heated. In some illustrative examples, when ink **250** is heated, volatiles of fiducial **246** are evacuated during curing of composite ply **234.** In other illustrative examples, ink **250** does not evacuate during curing. In some illustrative examples, ink **250** remains in the completed composite part, such as ceramic matrix composite part **274.**

Ceramic matrix composite part **274** comprises plurality of ceramic matrix composite plies **278** and ink **280** between two plies of plurality of ceramic matrix composite plies **278.** In some illustrative examples, one of the two plies is a partial ply.

In some illustrative examples, ink **280** is arranged in a fiducial with six degrees of freedom, such as fiducial **246** with six degrees of freedom **248.** In other illustrative examples, ink **280** can be dispersed during curing and may no longer resemble a fiducial.

In some illustrative examples, fiducial **212** is present over protective film **204** on composite ply **202.** In some illustrative examples, composite ply **202** is created by cutting **222** ply shape **206** into sheet of ceramic matrix composite material **218** having protective film **220.**

Fiducial **212** is placed onto protective film **204** in ply shape **206.** In some illustrative examples, placing fiducial **212** onto protective film **204** comprises printing fiducial **212** onto protective film **204.** In other illustrative examples, placing fiducial **212** onto protective film **204** comprises adhering fiducial **212** onto protective film **204.** In these illustrative examples, adhesive **216** adheres fiducial **212** to protective film **204.** Fiducial **212** comprises six degrees of freedom **214.**

In some illustrative examples, placing composite ply **202** onto layup tool **226** comprises placing composite ply **202** onto substantially planar **232** tool surface **230.** By placing composite ply **202** onto substantially planar **232** tool surface **230,** protective film **204** does not undesirably displace relative to composite ply **202.**

After placing composite ply **202** onto layup tool **226,** camera system **272** captures an image, image **273** of fiducial **212** on layup tool **226.** In some illustrative examples, determining the position of fiducial **212** of composite ply **202** relative to layup tool **226** comprises determining a location of fiducial **212** in image **273.** After determining the position of composite ply **202** on layup tool **226,** protective film **204** with fiducial **212** is removed.

The illustrative examples determine whether the difference between the between the actual position and the designed position is within tolerance. The illustrative examples generate an alert when the difference is not within tolerance. For example, if a difference between actual position **208** and designed position **224** is not within tolerance, the illustrative examples generate an alert. The alert can take any desirable form. In some illustrative examples, no further composite material will be placed onto a respective tool until the out of tolerance difference is resolved.

The illustration of manufacturing environment **200** in **Figure 2** is not meant to imply physical or architectural limitations to the manner in which an illustrative example may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative example.

For example, additional composite plies (not depicted) can be placed onto layup tool **262** prior to placing composite ply **234.** Additional composite plies (not depicted) can be placed onto composite ply **234** after placement of composite ply **234.** Further, composite ply **234** could instead be placed on a planar or substantially planar tool surface.

In some illustrative examples, the six degree of freedom position of each ply relative to layup mold is stored as part of the build plan in a lookup table.

Although the illustrative examples above discuss ceramic matrix composite materials, in other illustrative examples the composite materials can comprise other materials. In some illustrative examples, the composite materials can comprise polymer matrix composites. In these illustrative examples, at least one of composite ply **202** or composite ply **234** can comprise a polymer matrix composite. In some of these illustrative examples, at least one of composite ply **202** or composite ply **234** is cut from a sheet of polymer matrix composite material instead of a sheet of ceramic matrix composite material. In these illustrative examples, composite ply **202** or composite ply **234** forms a polymer matrix composite part with a plurality of polymer matrix composite plies instead of ceramic matrix composite part **274.**

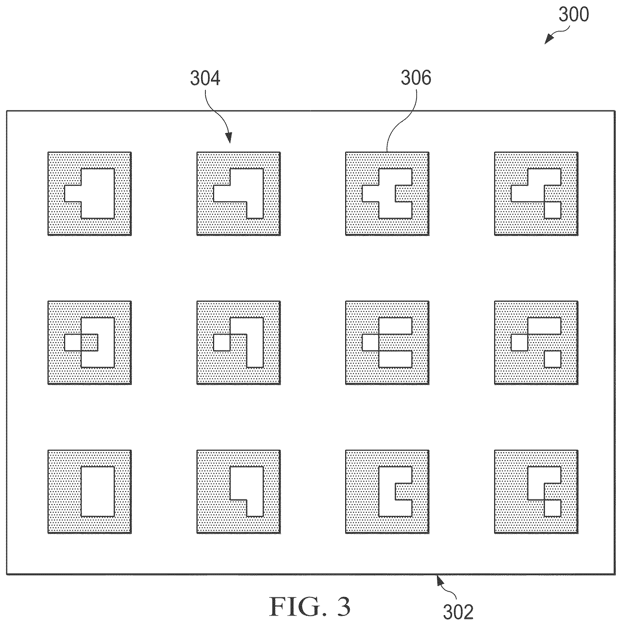

Turning now to **Figure 3****,** an illustration of a top view of fiducials printed on a sheet of composite material is depicted in accordance with an illustrative example. Sheet of composite material **302** can be used to manufacture a composite part of aircraft **100** of **Figure 1****.** Sheet of composite material **302** can be a physical implementation of sheet of ceramic matrix composite material **252** of **Figure 2****.** Sheet of composite material **302** can take the form of a sheet of ceramic matrix composite material. Sheet of composite material can take the form of a sheet of polymer matrix composite material.

In view **300,** plurality of fiducials **304** is present on sheet of composite material **302.** Plurality of fiducials **304** is formed of any desirable material compatible with sheet of composite material **302.** In some illustrative examples, plurality of fiducials **304** is printed onto sheet of composite material **302** using a compatible ink. In some illustrative examples, the ink is configured to remain within a completed composite part. In some illustrative examples, the ink is configured to be released with other volatiles during curing of sheet of composite material **302.**

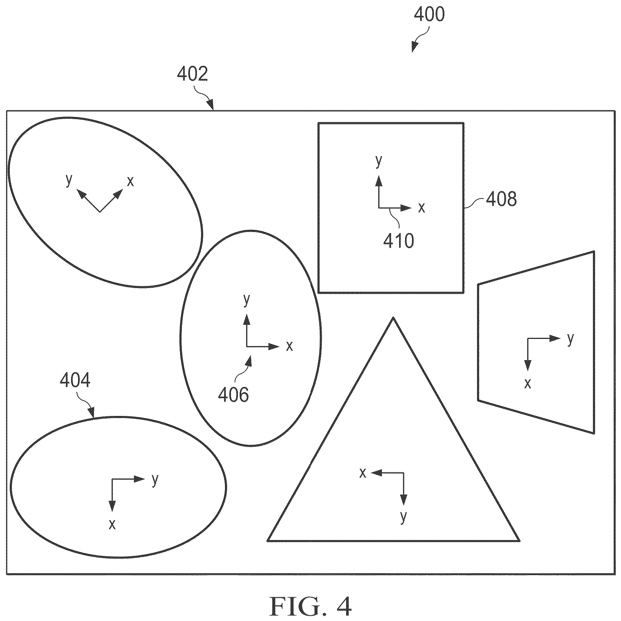

Turning now to **Figure 4****,** an illustration of a top view of ply cut program is depicted in accordance with an illustrative example. Ply cut program **400** can be used in manufacturing a composite part of aircraft **100** of **Figure 1****.** Ply cut program **400** can be used in cutting **260** of **Figure 2****.** Ply cut program **400** can be used to cut sheet of composite material **302** of **Figure 3****.**

Ply cut program **400** comprises plurality of cuts **404** and plurality of coordinate systems **406.** Plurality of cuts **404** is configured to cut a plurality of plies. Each ply of the plurality of plies has its own respective coordinate system of plurality of coordinate systems **406.**

Ply cut **408** of plurality of cuts **404** can be used to cut a ply having fiducial **306** of sheet of composite material **302.** Ply cut **408** has coordinate system **410** of plurality of coordinate systems **406.**

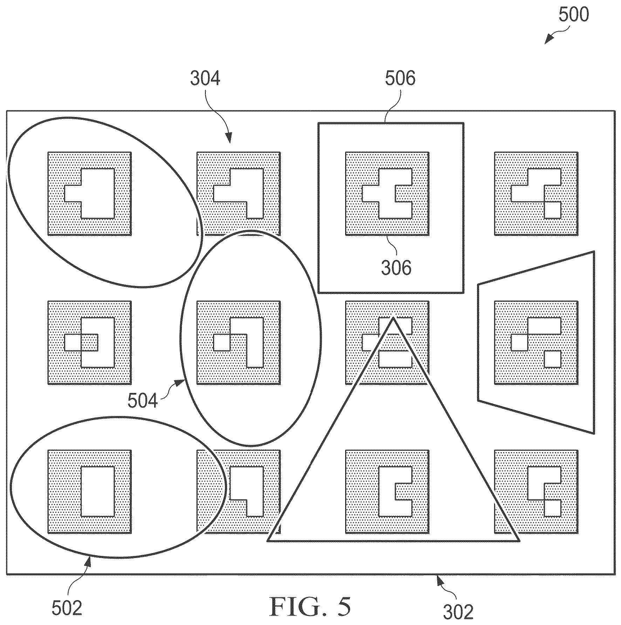

Turning now to **Figure 5****,** an illustration of a top view of a cut sheet of composite material with fiducials is depicted in accordance with an illustrative example. View **500** is a view of sheet of composite material **302** after being cut using ply cut program **400** of **Figure 4****.**

In view **500,** plurality of cuts **502** have been made into sheet of composite material **302** to form plurality of plies **504.** Ply **506** of plurality of plies **504** comprises fiducial **306.** Fiducial **306** can be used for verifying location of ply **506** on a layup tool, mandrel, or any other desirable type of tool.

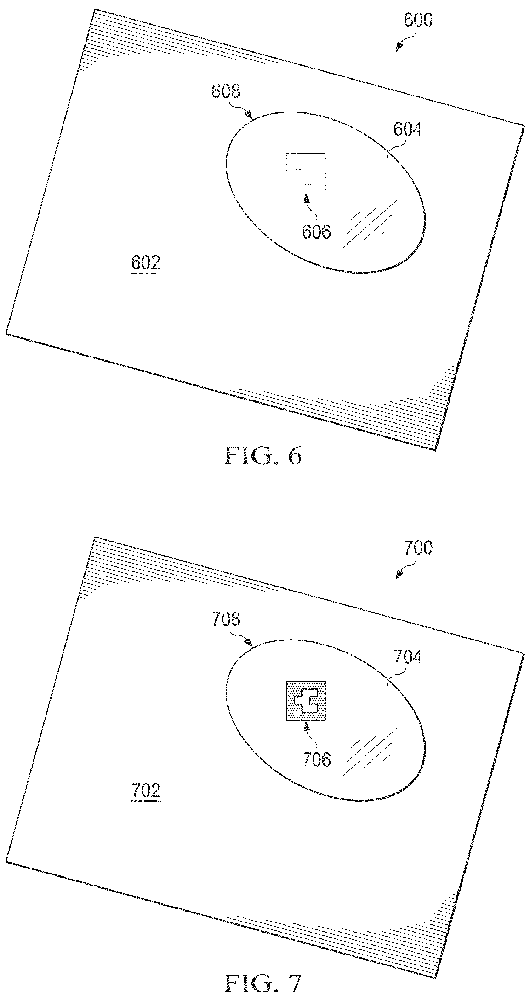

Turning now to **Figure 6****,** an illustration of a top view of a ply on a layup tool is depicted in accordance with an illustrative example. View **600** is a view of composite ply **604** on layup tool **602.** Composite ply **604** is a physical implementation of composite ply **234** of **Figure 2****.** Composite ply **604** can be used to form a portion of aircraft **100** of **Figure 1****.** Composite ply **604** can be an example of a ply cut from sheet of composite material **302** of **Figure 3****.** Composite ply **604** can be an example of a ply cut using ply cut program **400** of **Figure 4****.**

Composite ply **604** comprises fiducial **606.** Fiducial **606** is printed directly on the composite material of composite ply **604.** In this illustrative example, fiducial **606** is positioned below a protective film. Fiducial **606** can be used to verify position **608** of composite ply **604** on layup tool **602.**

Composite ply **604** comprises any desirable composite material. In some illustrative examples, composite ply **604** comprises one of a polymer matrix composite material or a ceramic matrix composite material.

Turning now to **Figure 7****,** an illustration of a top view of a ply on a layup tool is depicted in accordance with an illustrative example. View **700** is a view of composite ply **704** on layup tool **702.** Composite ply **704** is a physical implementation of composite ply **234** of **Figure 2****.** Composite ply **704** can be used to form a portion of aircraft **100** of **Figure 1****.** Composite ply **704** can be an example of a ply cut using ply cut program **400** of **Figure 4****.**

Composite ply **704** comprises fiducial **706.** Fiducial **706** is positioned on the protective film of composite ply **704.** In some illustrative examples, fiducial **706** can be adhered to the protective film. In some illustrative examples, fiducial **706** can be printed onto the protective film. Fiducial **706** can be used to verify position **708** of composite ply **704** on layup tool **702.**

Composite ply **704** comprises any desirable composite material. In some illustrative examples, composite ply **704** comprises one of a polymer matrix composite material or a ceramic matrix composite material.

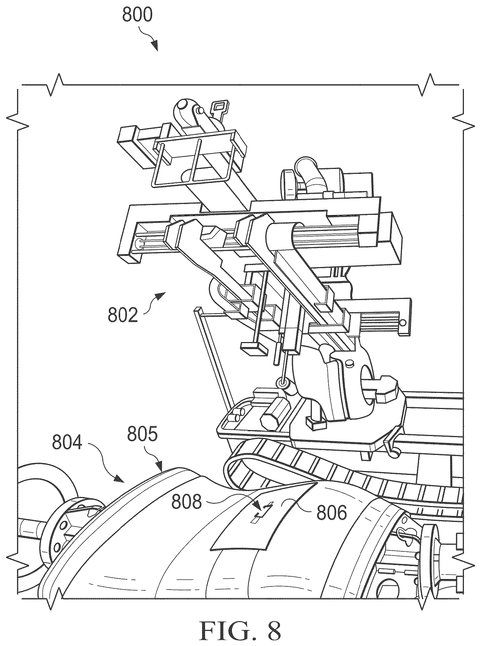

Turning now to **Figure 8****,** an illustration of an isometric view of a robotic end effector and a ply placed on a layup tool is depicted in accordance with an illustrative example. View **800** is a view within a manufacturing environment for placement and verification of a location of composite plies. Robotic end effector **802** within manufacturing environment is used to place composite ply **806** having fiducial **808** onto layup tool **804.** In this illustrative example, layup tool **804** has curvature **805.** It is more desirable to utilize composite plies with fiducials printed directly on the composite material for layup tool **804** having curvature **805.** However, in this illustrative example, fiducial **808** is adhered to a protective film of composite ply **806.**

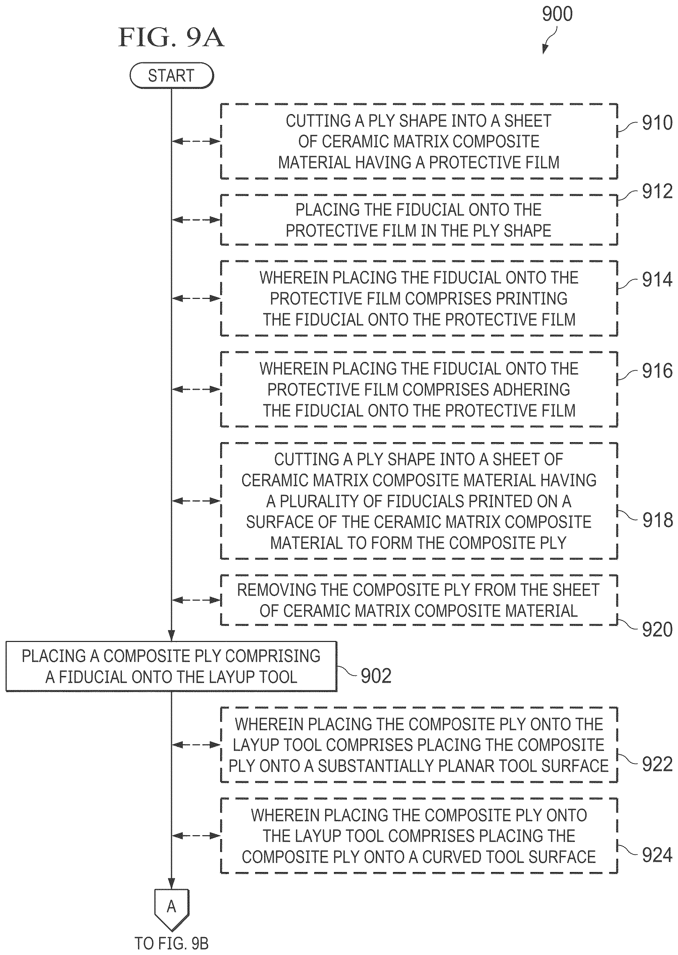

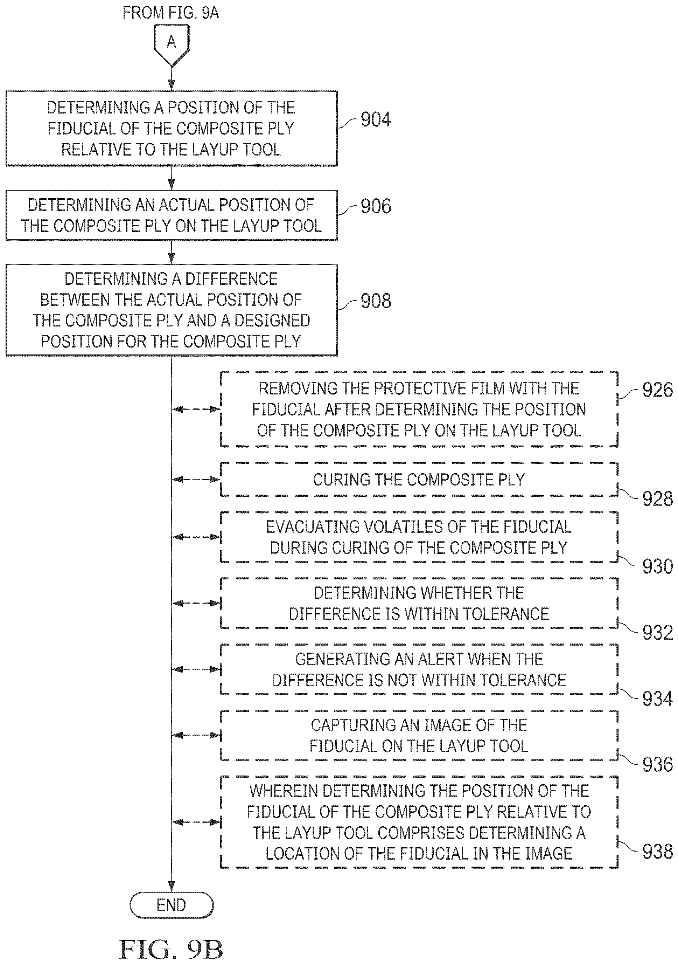

Turning now to **Figures 9A** and **9B****,** a flowchart of a method of locating a composite ply on a layup tool is depicted in accordance with an illustrative example. Method **900** can be used in manufacturing a component of aircraft **100** of **Figure 1****.** Method **900** can be used to locate composite ply **234** and composite ply **202** of **Figure 2****.** Method **900** can be used with Sheet of composite material **302 of** **Figure 3****.** Method **900** can be performed with a composite ply cut using ply cut program **400 of** **Figure 4****.** Method **900** can be performed with plurality of plies **504** of **Figure 5****.** Method **900** can be performed to locate composite ply **604** of **Figure 6****.** Method **900** can be performed to locate composite ply **704** of **Figure 7****.** Method **900** can be performed using robotic end effector **802** to locate composite ply **806** of **Figure 8****.**

Method **900** places a composite ply comprising a fiducial onto the layup tool (operation **902).** Method **900** determines a position of the fiducial of the composite ply relative to the layup tool (operation **904).** Method **900** determines an actual position of the composite ply on the layup tool (operation **906).** Method **900** determines a difference between the actual position of the composite ply and a designed position for the composite ply (operation **908).** Afterwards, method **900** terminates.

In some illustrative examples, method **900** cuts a ply shape into a sheet of ceramic matrix composite material having a protective film (operation **910).** In some illustrative examples, method **900** places the fiducial onto the protective film in the ply shape (operation **912).**

In some illustrative examples, placing the fiducial onto the protective film comprises printing the fiducial onto the protective film (operation **914).** In some illustrative examples, placing the fiducial onto the protective film comprises adhering the fiducial onto the protective film (operation **916).**

In some illustrative examples, method **900** cuts a ply shape into a sheet of ceramic matrix composite material having a plurality of fiducials printed on a surface of the ceramic matrix composite material to form the composite ply (operation **918);** and

In some illustrative examples, method **900** removes the composite ply from the sheet of ceramic matrix composite material (operation **920).** In some illustrative examples, placing the composite ply onto the layup tool comprises placing the composite ply onto a substantially planar tool surface **(922).**

In some illustrative examples, placing the composite ply onto the layup tool comprises placing the composite ply onto a curved tool surface (operation **924).**

In some illustrative examples, method **900** removes the protective film with the fiducial after determining the position of the composite ply on the layup tool (operation **926).**

In some illustrative examples, method **900** cures the composite ply (operation **928).**

In some illustrative examples, method **900** evacuates volatiles of the fiducial during curing of the composite ply (operation **930).**

In some illustrative examples, method **900** determines whether the difference is within tolerance (operation **932).**

In some illustrative examples, method **900** generates an alert when the difference is not within tolerance (operation **934).**

In some illustrative examples, method **900** captures an image of the fiducial on the layup tool (operation **936).**

In some illustrative examples, determining the position of the fiducial of the composite ply relative to the layup tool comprises determining a location of the fiducial in the image (operation **938).**

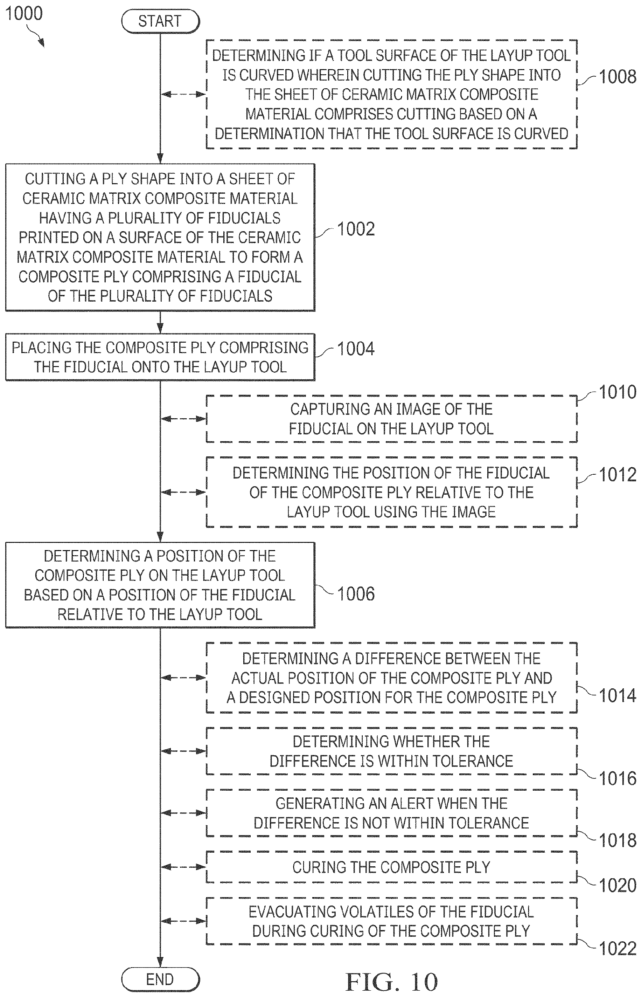

Turning now to **Figure 10****,** a flowchart of a method of locating a composite ply on a layup tool is depicted in accordance with an illustrative example. Method **1000** can be used in manufacturing a component of aircraft **100** of **Figure 1****.** Method **1000** can be used to locate composite ply **234** and composite ply **202** of **Figure 2****.** Method **1000** can be used with Sheet of composite material **302** of **Figure 3****.** Method **1000** can be performed with a composite ply cut using ply cut program **400** of **Figure 4****.** Method **1000** can be performed with plurality of plies **504** of **Figure 5****.** Method **1000** can be performed to locate composite ply **604** of **Figure 6****.** Method **1000** can be performed to locate composite ply **704** of **Figure 7****.** Method **1000** can be performed using robotic end effector **802** to locate composite ply **806** of **Figure 8****.**

Method **1000** cuts a ply shape into a sheet of ceramic matrix composite material having a plurality of fiducials printed on a surface of the ceramic matrix composite material to form a composite ply comprising a fiducial of the plurality of fiducials (operation **1002).** Method **1000** places the composite ply comprising the fiducial onto the layup tool (operation **1004).** Method **1000** determines a position of the composite ply on the layup tool based on a position of the fiducial relative to the layup tool (operation **1006).** Afterwards, method **1000** terminates.

Although method **1000** is discussing ceramic matrix composite material, in other illustrative examples the composite material sheet can comprise any desirable composite material. In some illustrative examples, the composite ply comprises a polymer matrix composite material. In some illustrative examples, the method cuts a ply shape into a sheet of polymer matrix composite material having a plurality of fiducials printed on a surface of the polymer matrix composite material to form a composite ply comprising a fiducial of the plurality of fiducials.

In some illustrative examples, method **1000** determines if a tool surface of the layup tool is curved, wherein cutting the ply shape into the sheet of ceramic matrix composite material comprises cutting based on a determination that the tool surface is curved (operation **1008).** In some illustrative examples, when the layup tool is curved, it is desirable to have the fiducial located on the composite material.

In some illustrative examples, method **1000** captures an image of the fiducial on the layup tool (operation **1010).** In some illustrative examples, method **1000** determines the position of the fiducial of the composite ply relative to the layup tool using the image (operation **1012).**

In some illustrative examples, method **1000** determines a difference between the actual position of the composite ply and a designed position for the composite ply (operation **1014).** In some illustrative examples, method **1000** determines whether the difference is within tolerance (operation **1016).** In some illustrative examples, method **1000** generates an alert when the difference is not within tolerance (operation **1018**).

In some illustrative examples, method **1000** cures the composite ply (operation **1020).** In some illustrative examples, method **1000** evacuates volatiles of the fiducial during curing of the composite ply (operation **1022).**

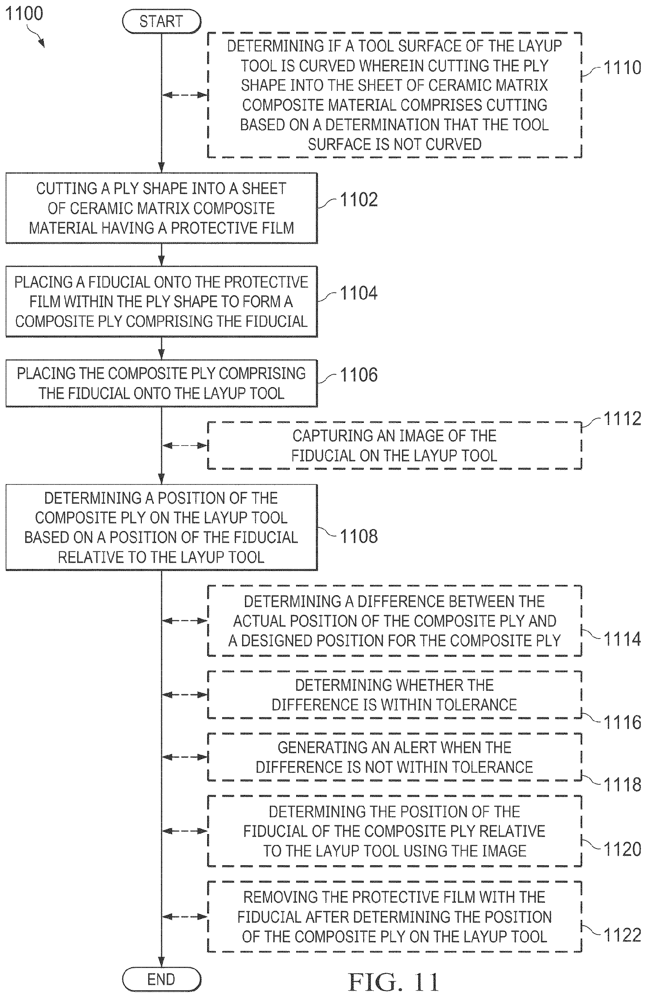

Turning now to **Figure 11****,** a flowchart of a method of locating a composite ply on a layup tool is depicted in accordance with an illustrative example. Method **1100** can be used in manufacturing a component of aircraft **100** of **Figure 1****.** Method **1100** can be used to locate composite ply **234** and composite ply **202** of **Figure 2****.** Method **1100** can be used with Sheet of composite material **302** of **Figure 3****.** Method **1100** can be performed with a composite ply cut using ply cut program **400 of** **Figure 4****.** Method **1100** can be performed with plurality of plies **504** of **Figure 5****.** Method **1100** can be performed to locate composite ply **604** of **Figure 6****.** Method **1100** can be performed to locate composite ply **704** of **Figure 7****.** Method **1100** can be performed using robotic end effector **802** to locate composite ply **806** of **Figure 8****.**

Method **1100** cuts a ply shape into a sheet of ceramic matrix composite material having a protective film (operation **1102).** Method **1100** places a fiducial onto the protective film within the ply shape to form a composite ply comprising the fiducial (operation **1104).** Method **1100** places the composite ply comprising the fiducial onto the layup tool (operation **1106).** Method **1100** determines a position of the composite ply on the layup tool based on a position of the fiducial relative to the layup tool (operation **1108).** Afterwards, method **1100** terminates.

Although method **1100** is discussing ceramic matrix composite material, in other illustrative examples the composite material sheet can comprise any desirable composite material. In some illustrative examples, the composite ply comprises a polymer matrix composite material. In some illustrative examples, the method cuts a ply shape into a sheet of polymer matrix composite material having a protective film.

Method **1100** determines if a tool surface of the layup tool is curved, wherein cutting a ply shape into a sheet of ceramic matrix composite material comprises cutting based on a determination that the tool surface is not curved, (operation **1110).** In some illustrative examples, method **1100** captures an image of the fiducial on the layup tool (operation **1112).** In some illustrative examples, the image of the fiducial can be captured using a same robotic end effector that placed the composite ply onto the layup tool. In some illustrative examples, a camera system is attached to a robotic end effector configured to place and image the composite ply.

In some illustrative examples, method **1100** determines a difference between the actual position of the composite ply and a designed position for the composite ply (operation **1114).** The actual position can be determined from the image. The designed position is determined from at least one of a build plan or a three dimensional model for the part.

In some illustrative examples, method **1100** determines whether the difference is within tolerance (operation **1116).** In some illustrative examples, method **1100** generates an alert when the difference is not within tolerance (operation **1118).** In some illustrative examples, the layup is paused until a difference between the designed and actual location of the composite ply is corrected.

In some illustrative examples, method **1100** determines the position of the fiducial of the composite ply relative to the layup tool using the image (operation **1120).** In some illustrative examples, method **1100** removes the protective film with the fiducial after determining the position of the composite ply on the layup tool (operation **1122).**

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C, or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted examples illustrate the architecture, functionality, and operation of some possible implementations of apparatuses and methods in an illustrative example. In this regard, each block in the flowcharts or block diagrams may represent at least one of a module, a segment, a function, or a portion of an operation or step.

In some alternative implementations of an illustrative example, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **910** through operation **938** may be optional. As another example, operation **1010** through operation **1022** may be optional. As another example, operation **1112** through operation **1122** may be optional.

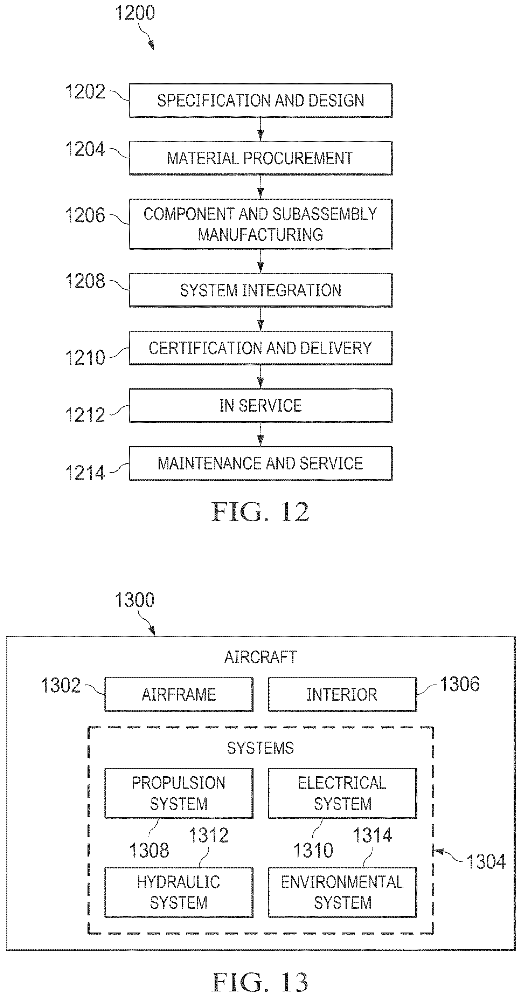

Illustrative examples of the present disclosure may be described in the context of aircraft manufacturing and service method **1200** as shown in **Figure 12** and aircraft **1300** as shown in **Figure 13****.** Turning first to **Figure 12****,** an illustration of an aircraft manufacturing and service method in a form of a block diagram is depicted in accordance with an illustrative example. During pre-production, aircraft manufacturing and service method **1200** may include specification and design **1202** of aircraft **1300** in **Figure 13** and material procurement **1204.**

During production, component and subassembly manufacturing **1206** and system integration **1208** of aircraft **1300** takes place. Thereafter, aircraft **1300** may go through certification and delivery **1210** in order to be placed in service **1212.** While in service **1212** by a customer, aircraft **1300** is scheduled for routine maintenance and service **1214,** which may include modification, reconfiguration, refurbishment, or other maintenance and service.

Each of the processes of aircraft manufacturing and service method **1200** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 13****,** an illustration of an aircraft in a form of a block diagram is depicted in which an illustrative example may be implemented. In this example, aircraft **1300** is produced by aircraft manufacturing and service method **1200** of **Figure 12** and may include airframe **1302** with plurality of systems **1304** and interior **1306.** Examples of systems **1304** include one or more of propulsion system **1308,** electrical system **1310,** hydraulic system **1312,** and environmental system **1314.** Any number of other systems may be included.

Apparatuses and methods embodied herein may be employed during at least one of the stages of aircraft manufacturing and service method **1200.** One or more illustrative examples may be manufactured or used during at least one of component and subassembly manufacturing **1206,** system integration **1208,** in service **1212,** or maintenance and service **1214** of **Figure 12****.**

The illustrative examples present materials and methods for accurately locating composite plies. Parts made of fabric based CMC material are performed by building up multiple layers of material on top of a layup mandrel or tool mold. A composite part is built up of unique composite plies placed next to, and on top of other composite plies. Tolerances are associated with the position of composite plies. In cases where the part edges are not trimmed, the edges of the plies need to be positioned precisely. Butt splices have overlap and gaps tolerances, overlapped plies have different tolerances, often within about 1.3 mm (about 0.050") of nominal.

Tolerances are associated with overlaps and gaps between ply boundaries. Each ply has a known coordinate system. The layup mold has a known coordinate system.

Based on a build plan, the composite ply is placed on a known position on the layup mold. Comparing the nominal position of where the composite ply is supposed to be placed to the as-built position can be used to determine if the ply border is in the correct place, and if gaps and overlaps meet tolerances.

In the illustrative examples, a fiducial is placed upon the backing material. When placed on a relatively flat surface, the fiducial on the backing material can be used to locate the ply prior to removing the backing. Each fiducial can be unique to the roll of material or unique to the cut material.

In the illustrative examples, when placed upon a more contoured surface, a fiducial associated with the composite material can be used for ply placement. Each fiducial can be unique to the roll of material or unique to the cut material. A part is built up of unique plies placed next to, and on top of other plies. Each ply has a known coordinate system. The layup mold has a known coordinate system. Based on a build plan, the ply is placed on a known position on the layup mold. Comparing the nominal position of where the ply is supposed to be placed to the as-built position can tell you if the ply border is in the correct place: and if gaps and overlaps meet tolerances.

A large number of uniquely identifiable six degrees of freedom (6DOF) fiducials can be printed on the raw CMC material before the slurry and protective films are added. The positions of the 6DOF fiducials on the roll of raw material can be anywhere on the roll of material. A ply cut program for each of the plies cuts unique ply shapes from the roll of raw material with the fiducials.

In the illustrative examples, a vision system captures an image of 6DOF fiducial and unique ID within boundaries of each unique ply. In the illustrative examples, a position of a 6DOF fiducial within each ply is derived relative to a coordinate system of the individual ply. After a ply is placed on layup mandrel / part mold the position of the ply relative to the layup mandrel / part mold is derived using the vision system. In the illustrative examples, the ply boundaries can be calculated relative to the nominal positions.

The description of the different illustrative examples has been presented for purposes of illustration and description, and is not intended to be exhaustive or limited to the examples in the form disclosed. Many modifications and variations will be apparent to those of ordinary skill in the art. Further, different illustrative examples may provide different features as compared to other illustrative examples. The example or examples selected are chosen and described in order to best explain the principles of the examples, the practical application, and to enable others of ordinary skill in the art to understand the disclosure for various examples with various modifications as are suited to the particular use contemplated.

The disclosure includes the following clauses:
1. A method (900) of locating a composite ply (202, 234, 506, 604, 704) on a layup tool (226, 262, 804) comprising:
   placing (902) a composite ply (202, 234, 506, 604, 704) comprising a fiducial (212, 246, 306, 606, 706) onto the layup tool (226, 262, 804);
   determining (904) a position of the fiducial (212, 246, 306, 606, 706) of the composite ply (202, 234, 506, 604, 704) relative to the layup tool (226, 262, 804);
   determining (906) an actual position (208, 238) of the composite ply (202, 234, 506, 604, 704) on the layup tool (226, 262, 804); and
   determining (908) a difference between the actual position (208, 238) of the composite ply (202, 234, 506, 604, 704) and a designed position (224, 264) for the composite ply (202, 234, 506, 604, 704).
2. The method (900) of clause 1, further comprising:
   cutting (910) a ply shape (206) into a sheet of ceramic matrix composite material (218) having a protective film (220); and
   placing (912) the fiducial (212, 706) onto the protective film (220) in the ply shape (206).
3. The method (900) of clause 2, wherein (914) placing the fiducial (212, 706) onto the protective film (220) comprises printing the fiducial (212, 706) onto the protective film (220).
4. The method (900) of clause 2 or 3, wherein (916) placing the fiducial (212, 706) onto the protective film (220) comprises adhering the fiducial (212, 706) onto the protective film (220).
5. The method (900) of any one of clauses 2-4, further comprising:
   removing (926) the protective film (220) with the fiducial (212, 706) after determining the position of the composite ply (202, 704) on the layup tool (226).
6. The method (900) of any one of clauses 2-5, wherein (922) placing the composite ply (202, 704) onto the layup tool (226) comprises placing the composite ply (202, 704) onto a substantially planar (232) tool surface (230).
7. The method (900) of any one of the preceding clauses, further comprising:
   cutting (918) a ply shape (240) into a sheet of ceramic matrix composite material (252, 302) having a plurality of fiducials (256, 304) printed on a surface of the sheet of ceramic matrix composite material (252, 302) to form the composite ply (234, 506, 604); and
   removing (920) the composite ply (234, 506, 704) from the sheet of ceramic matrix composite material (252, 302).
8. The method (900) of clause 7, wherein (924) placing the composite ply (234, 506, 604) onto the layup tool (262, 804) comprises placing the composite ply (234, 506, 604) onto a curved (268) tool surface (266).
9. The method (900) of clause 7 or 8, further comprising:
   curing (928) the composite ply (234, 506, 604); and
   evacuating (930) volatiles of the fiducial (246, 306, 606) during curing of the composite ply (234, 506, 604) .
10. The method (900) of any one of the preceding clauses, further comprising:
   determining (932) whether the difference is within tolerance; and
   generating (934) an alert when the difference is not within tolerance.
11. The method (900) of any one of the preceding clauses, further comprising:
   capturing (936) an image (273) of the fiducial (246, 306, 606) on the layup tool (262, 804); and
   wherein (938) determining the position of the fiducial (246, 306, 606) of the composite ply (234, 506, 604) relative to the layup tool (262, 804) comprises determining a location of the fiducial (246, 306, 606) in the image (273).
12. A method (1000) of locating a composite ply (202, 234, 506, 604, 704) on a layup tool (226, 262, 804) comprising:
   cutting a ply shape (240) into a sheet of ceramic matrix composite material (252) having a plurality of fiducials (256) printed on a surface of the ceramic matrix composite material to form a composite ply (234, 506, 604) comprising a fiducial (246, 306, 606) of the plurality of fiducials (256);
   placing (1006) the composite ply (234, 506, 604) comprising the fiducial (246, 306, 606) onto the layup tool (262, 804); and
   determining (1008) a position of the composite ply (234, 506, 604) on the layup tool (262, 804) based on a position of the fiducial (246, 306, 606) relative to the layup tool (262, 804).
13. The method (1000) of clause 12, further comprising:
   determining (1002) if a tool surface (230, 266) of the layup tool (226, 262, 804) is curved (268), wherein cutting the ply shape (240) into the sheet of ceramic matrix composite material (252) comprises cutting based (1004) on a determination that the tool surface (230) is curved (268).
14. The method (1000) of clause 12 or 13, further comprising:
   determining (1014) a difference between the actual position (238) of the composite ply (234, 506, 604) and a designed position (264) for the composite ply (234, 506, 604) .
15. The method (1000) of clause 14, further comprising:
   determining (1016) whether the difference is within tolerance; and
   generating (1018) an alert when the difference is not within tolerance.
16. The method (1000) of any one of clauses 12-15, further comprising:
   capturing (1010) an image (273) of the fiducial (212, 246, 306, 606, 706) on the layup tool (226, 262, 804); and
   determining (1012) the position of the fiducial (246, 306, 606) of the composite ply (234, 506, 604) relative to the layup tool (262, 804) using the image (273).
17. The method (1000) of any one of clauses 12-16, further comprising:
   curing the composite ply (234, 506, 604); and
   evacuating volatiles of the fiducial (246, 306, 606) during curing of the composite ply (234, 506, 604).
18. A method (1100) of locating a composite ply (202, 234, 506, 604, 704) on a layup tool (226, 262, 804) comprising:
   cutting a ply shape (206) into a sheet of ceramic matrix composite material (218) having a protective film (220);
   placing (1106) a fiducial (212, 706) onto the protective film (220) within the ply shape (206) to form a composite ply (202, 704) comprising the fiducial (212, 706) ;
   placing (1108) the composite ply (202, 704) comprising the fiducial (212, 706) onto the layup tool (226, 804); and
   determining (1110) a position of the composite ply (202, 704) on the layup tool (226, 804) based on a position of the fiducial (212, 706) relative to the layup tool (226, 804).
19. The method (1100) of clause 18, further comprising:
   determining (1102) if a tool surface (230) of the layup tool (226, 262, 804) is curved (268), wherein cutting a ply shape (206) into a sheet of ceramic matrix composite material (218) comprises cutting based (1104) on a determination that the tool surface (230) is not curved (268).
20. The method (1100) of clause 18 or 19, further comprising:
   determining (1114) a difference between the actual position (208) of the composite ply (202, 704) and a designed position (224) for the composite ply (202, 704).
21. The method (1100) of clause 20 further comprising:
   determining (1116) whether the difference is within tolerance; and
   generating (1118) an alert when the difference is not within tolerance.
22. The method (1100) of any one of clauses 18-21, further comprising:
   capturing (1112) an image (273) of the fiducial (212, 706) on the layup tool (226, 804); and
   determining (1120) the position of the fiducial (212, 706) of the composite ply (202, 704) relative to the layup tool (226, 804) using the image (273).
23. The method (1100) of any one of clauses 18-22, further comprising:
   removing (1122) the protective film (220) with the fiducial (212, 706) after determining the position of the composite ply (202, 704) on the layup tool (226, 804).
24. A ceramic matrix composite part (274) comprising:
   a plurality of ceramic matrix composite plies (278); and
   ink (280) between two plies of the plurality of ceramic matrix composite plies (278).
25. The ceramic matrix composite part (274) of clause 24, wherein the ink (250, 280) is arranged in a fiducial (246, 706) with six degrees of freedom (248).
26. The ceramic matrix composite part (274) of clause 24 or 25, wherein one of the two plies is a partial ply.

## Claims

1. A method (900) of locating a composite ply (202, 234, 506, 604, 704) on a layup tool (226, 262, 804) comprising:
placing (902) a composite ply (202, 234, 506, 604, 704) comprising a fiducial (212, 246, 306, 606, 706) onto the layup tool (226, 262, 804);
determining (904) a position of the fiducial (212, 246, 306, 606, 706) of the composite ply (202, 234, 506, 604, 704) relative to the layup tool (226, 262, 804);
determining (906) an actual position (208, 238) of the composite ply (202, 234, 506, 604, 704) on the layup tool (226, 262, 804); and
determining (908) a difference between the actual position (208, 238) of the composite ply (202, 234, 506, 604, 704) and a designed position (224, 264) for the composite ply (202, 234, 506, 604, 704).

2. The method (900) of claim 1, further comprising:
cutting (910) a ply shape (206) into a sheet of ceramic matrix composite material (218) having a protective film (220); and
placing (912) the fiducial (212, 706) onto the protective film (220) in the ply shape (206), preferably wherein:
(914) placing the fiducial (212, 706) onto the protective film (220) comprises printing the fiducial (212, 706) onto the protective film (220), and/or
(916) placing the fiducial (212, 706) onto the protective film (220) comprises adhering the fiducial (212, 706) onto the protective film (220).

3. The method (900) of claim 1 or 2, further comprising:
removing (926) the protective film (220) with the fiducial (212, 706) after determining the position of the composite ply (202, 704) on the layup tool (226).

4. The method (900) of claim 2 or 3, wherein (922) placing the composite ply (202, 704) onto the layup tool (226) comprises placing the composite ply (202, 704) onto a substantially planar (232) tool surface (230).

5. The method (900) of any one of the preceding claims, further comprising:
cutting (918) a ply shape (240) into a sheet of ceramic matrix composite material (252, 302) having a plurality of fiducials (256, 304) printed on a surface of the sheet of ceramic matrix composite material (252, 302) to form the composite ply (234, 506, 604); and
removing (920) the composite ply (234, 506, 704) from the sheet of ceramic matrix composite material (252, 302), preferably wherein:
(924) placing the composite ply (234, 506, 604) onto the layup tool (262, 804) comprises placing the composite ply (234, 506, 604) onto a curved (268) tool surface (266); and/or
The method further comprises curing (928) the composite ply (234, 506, 604), and evacuating (930) volatiles of the fiducial (246, 306, 606) during curing of the composite ply (234, 506, 604).

6. The method (900) of any one of the preceding claims, further comprising:
determining (932) whether the difference is within tolerance; and
generating (934) an alert when the difference is not within tolerance.

7. The method (900) of any one of the preceding claims, further comprising:
capturing (936) an image (273) of the fiducial (246, 306, 606) on the layup tool (262, 804); and
wherein (938) determining the position of the fiducial (246, 306, 606) of the composite ply (234, 506, 604) relative to the layup tool (262, 804) comprises determining a location of the fiducial (246, 306, 606) in the image (273).

8. A method (1000) of locating a composite ply (202, 234, 506, 604, 704) on a layup tool (226, 262, 804) comprising:
cutting a ply shape (240) into a sheet of ceramic matrix composite material (252) having a plurality of fiducials (256) printed on a surface of the ceramic matrix composite material to form a composite ply (234, 506, 604) comprising a fiducial (246, 306, 606) of the plurality of fiducials (256);
placing (1006) the composite ply (234, 506, 604) comprising the fiducial (246, 306, 606) onto the layup tool (262, 804); and
determining (1008) a position of the composite ply (234, 506, 604) on the layup tool (262, 804) based on a position of the fiducial (246, 306, 606) relative to the layup tool (262, 804).

9. The method (1000) of claim 8, further comprising:
determining (1002) if a tool surface (230, 266) of the layup tool (226, 262, 804) is curved (268), wherein cutting the ply shape (240) into the sheet of ceramic matrix composite material (252) comprises cutting based (1004) on a determination that the tool surface (230) is curved (268).

10. The method (1000) of claim 8 or 9, further comprising:
determining (1014) a difference between the actual position (238) of the composite ply (234, 506, 604) and a designed position (264) for the composite ply (234, 506, 604), and preferably:
determining (1016) whether the difference is within tolerance; and
generating (1018) an alert when the difference is not within tolerance.

11. The method (1000) of any one of claims 8-10, further comprising:
capturing (1010) an image (273) of the fiducial (212, 246, 306, 606, 706) on the layup tool (226, 262, 804), and determining (1012) the position of the fiducial (246, 306, 606) of the composite ply (234, 506, 604) relative to the layup tool (262, 804) using the image (273); and/or
curing the composite ply (234, 506, 604), and evacuating volatiles of the fiducial (246, 306, 606) during curing of the composite ply (234, 506, 604).

12. A method (1100) of locating a composite ply (202, 234, 506, 604, 704) on a layup tool (226, 262, 804) comprising:
cutting a ply shape (206) into a sheet of ceramic matrix composite material (218) having a protective film (220);
placing (1106) a fiducial (212, 706) onto the protective film (220) within the ply shape (206) to form a composite ply (202, 704) comprising the fiducial (212, 706) ;
placing (1108) the composite ply (202, 704) comprising the fiducial (212, 706) onto the layup tool (226, 804); and
determining (1110) a position of the composite ply (202, 704) on the layup tool (226, 804) based on a position of the fiducial (212, 706) relative to the layup tool (226, 804).

13. The method (1100) of claim 12, further comprising:
determining (1102) if a tool surface (230) of the layup tool (226, 262, 804) is curved (268), wherein cutting a ply shape (206) into a sheet of ceramic matrix composite material (218) comprises cutting based (1104) on a determination that the tool surface (230) is not curved (268); and/or
removing (1122) the protective film (220) with the fiducial (212, 706) after determining the position of the composite ply (202, 704) on the layup tool (226, 804).

14. A ceramic matrix composite part (274) comprising:
a plurality of ceramic matrix composite plies (278); and
ink (280) between two plies of the plurality of ceramic matrix composite plies (278).

15. The ceramic matrix composite part (274) of claim 14, wherein:
the ink (250, 280) is arranged in a fiducial (246, 706) with six degrees of freedom (248); and/or
one of the two plies is a partial ply.
